## Europäisches Patentamt

## European Patent Office

## Office européen des brevets

(19)

(11) Veröffentlichungsnummer: **0 085 345**
**B1**

(12) **EUROPÄISCHE PATENTSCHRIFT**

(45) Veröffentlichungstag der Patentschrift:
11.06.86

(51) Int. Cl.⁴: **C 22 B 34/12**

(21) Anmeldenummer: **83100378.5**

(22) Anmeldetag: **18.01.83**

(54) Verfahren zur Herstellung von Titandioxid-Konzentraten.

(30) Priorität: 03.02.82 DE 3203482
21.06.82 DE 3223068

(43) Veröffentlichungstag der Anmeldung:
10.08.83 Patentblatt 83/32

(45) Bekanntmachung des Hinweises auf die Patenterteilung:
11.06.86 Patentblatt 86/24

(84) Benannte Vertragsstaaten:
BE DE FR GB IT NL

(56) Entgegenhaltungen:
AU - B - 5 160 864
GB - A - 992 317
US - A - 2 120 602
US - A - 2 184 885
US - A - 2 657 976
US - A - 2 758 019
US - A - 2 852 362
US - A - 3 803 287
US - A - 3 950 489

(73) Patentinhaber: HOECHST AKTIENGESELLSCHAFT,
Postfach 80 03 20, D-6230 Frankfurt am Main 80 (DE)

(72) Erfinder: Jödden, Klaus, Dr., Neustrasse 66,
D-5042 Erftstadt (DE)
Erfinder: Heymer, Gero, Dr., Fasanenaue 12,
D-5042 Erftstadt (DE)
Erfinder: Stephan, Hans-Werner, Ölbergstrasse 77,
D-5000 Köln (DE)

## Beschreibung

Die vorliegende Erfindung betrifft ein Verfahren zur Herstellung von Titandioxid-Konzentraten durch EntfernAn des Eisens und Vanadiums aus Eisenoxide aufweisendem titanoxidhaltigem Material mit Hilfe von chlorhaltigen Gasen ohne Zusatz von Kohlenstoff.

Aus der AU-B-51 608/64 ist ein Verfahren zur Behandlung von Eisen-Titanoxid-Erzen unter Gewinnung von Titandioxid-Kristallen bekannt, bei welchem körniges Erz ohne Zusatz von reduzierenden Bestandteilen eine senkrecht stehende Kolonne durchwandert, in die seitlich Chlorgas eingeleitet wird. Dabei wird beim Chlorieren gebildetes, schwerflüchtiges Eisen-II-chlorid dadurch aus der die Reaktionszone darstellende Kolonne entfernt, daß in der Kolonne eine Mindesttemperatur von 1026°C, vorzugsweise von 1030 bis 1100°C, aufrechterhalten wird. Wenn auch in diesem Dokument weder Beispiele enthalten sind, noch Angaben über das stöchiometrische Verhältnis von Eisen-Titanoxid-Erz zu Chlor gemacht werden, so ist davon auszugehen, daß für die überwiegende Eisen-II-chlorid-Bildung bei der Chlorierung ein Chlor-Unterschuß erforderlich ist.

Das Verfahren zur Herstellung von künstlichem Rutil nach der US-A-3 950 489 verläuft über insgesamt fünf Stufen. In einer ersten Stufe wird Ilmenit-Erz bei Temperaturen von 900 bis 1050°C oxidierend geröstet, während das oxidierend geröstete Erz in einer zweiten Stufe in Anwesenheit von bis zu 10 Gewichts% Kohle in einem Fließbett bei Temperaturen von 800 bis 1000°C chloriert wird. In den folgenden Stufen wird aus dem chlorierten Erz durch Magnetscheidung, mit Hilfe eines vibrierenden Wasserstrahles sowie durch elektrostatische Trennung ein künstlicher Rutil mit hohem $TiO_2$-Gehalt erhalten.

Aus der US-A-2 184 895 ist ein Verfahren zur Entfernung von Eisen aus einem Eisen-Titan-Erz bekannt, bei welchem eine innige Mischung des Erzes mit 1 bis 12 Gewichts% Kohlenstoff bei Temperaturen über 500°C chloriert wird, wobei der Hauptteil des Eisens und merkliche Mengen Titan als Chloride verdampfen. Der verbleibende Rückstand besteht im wesentlichen aus Titandioxid mit nur geringem Eisengehalt.

Schließlich wird beim Verfahren zur Aufbereitung von Eisen- und Titanoxid enthaltenden Erzen nach der GB-A-1 359 882 eine Mischung des Erzes mit 20 bis 40 Gewichts% Kohlenstoff bei 800 bis 1000°C in einem Fließbettreaktor mit einer Gasmischung behandelt, welche neben Stickstoff 20 bis 50 Volumen% Chlor und 0 bis 10 Volumen% Sauerstoff enthält. Dabei wird das Eisenoxid hauptsächlich in Eisen-II-chlorid überführt.

Nachteilig ist bei den Verfahren gemäß der US-A-2 184 885 und der GB-A-1 359 882, daß sie bezüglich ihrer Selektivität schwierig zu kontrollieren sind, während das bei den Verfahren nach der AU-B-51 608/64 und der US-A-3 950 489 gebildete Eisen-II-chlorid wesentlich weniger flüchtig als Eisen-III-chlorid ist und bei höherer Temperatur äußerst korrosiv wirkt.

Es ist daher Aufgabe der vorliegenden Erfindung, ein Verfahren zum Entfernen des Eisens und Vanadiums aus Eisenoxide aufweisendem titanoxidhaltigem Material mit chlorhaltigen Gasen ohne Zusatz von Kohlenstoff anzugeben, bei welchem die Eisenoxide mit hoher Selektivität als Eisen-III-chlorid verflüchtigt werden. Das wird erfindungsgemäß dadurch erreicht, daß man das titanoxidhaltige Material sich in Richtung der Schwerkraft in einer auf Temperaturen von 800 bis 1010°C aufgeheizten Reaktionszone bewegen läßt und dabei im Gegenstrom mit einem aus Chlor und bis zu 30 Volumen% Inertgas bestehenden Gasgemisch umsetz, wobei sich bildendes Eisen-III-chlorid und Vanadiumoxichlorid verflüchtigt werden und ein im wesentlichen aus Titanoxid bestehender Rückstand verbleibt.

Das Verfahren gemäß der Erfindung kann wahlweise auch noch dadurch ausgestaltet sein, daß

a) man das titanoxidhaltige Material durch die senkrecht angeordnete Reaktionszone rieseln läßt;

b) man das titanoxidhaltige Material in der Reaktionszone mit Hilfe des chlorhaltigen Gasgemisches aufwirbelt;

c) als Inertgas Stickstoff dient;

d) das Gasgemisch mindestens 85 Volumen% Chlor enthält.

Beim erfindungsgemäßen Verfahren können als titanoxidhaltiges Material insbesondere Ilmenit (Hauptbestandteile: $FeTiO_3$, $Fe_2O_3$, $TiO_2$), Leukoxen (Verwitterungsprodukt des Ilmenits) oder Titanomagnetit (Hauptbestandteile: $Fe_3O_4$, $Fe_2O_3$, $TiO_2$) eingesetzt werden.

Beim Verfahren gemäß der Erfindung wird bei der Verwendung eines titanoxidhaltigen Materials, welches auch oxidisch gebundenes Vanadium enthält, gleichzeitig das Vanadium als Oxychlorid verflüchtigt.

Mit dem erfindungsgemäßen Verfahren kann der Eisengehalt im Chlorierungsrückstand bei hinreichender Reaktionszeit praktisch beliebig eingestellt werden, ohne daß es zu einer nennenswerten $TiCl_4$-Bildung kommt. Darüberhinaus ist das Reaktionssystem auch weitgehend gegen apparative Veränderungen unempfindlich.

Beim Verfahren gemäß der Erfindung haben die Wertigkeit und die Bindungsart des Eisens im titanoxidhaltigen Material keinen Einfluß auf die Vollständigkeit der Abtrennung des Eisens.

Beim erfindungsgemäßen Verfahren muß beim Aufwirbeln des titanoxidhaltigen Materials die Strömungsgeschwindigkeit des Gasgemisches mindestens so groß sein, daß ein Sintern oder Verkleben verhindert wird. Jedoch wird die Selektivität durch höhere Strömungsgeschwindigkeit praktisch nicht beeinträchtigt.

Vorteilhaft ist es beim Verfahren gemäß der Erfindung, wenn das titanoxidhaltige Material in feinerer Verteilung mit den chlorhaltigen Gasen in Berührung gebracht wird.

In den folgenden Beispielen bedeuten die Prozentangaben, wenn nichts anderes vermerkt ist, Gewichtsprozente.

**Beispiel 1** (Vergleichsbeispiel)

In ein waagerecht angeordnetes Quarzrohr (50 mm Ø) wurden 200 g Ilmenit mit einer Schüttdichte von 2400 g/l sowie der Zusammensetzung 53,5 % $TiO_2$, 21,5 % FeO, 20,9 % $Fe_2O_3$-0,9 % $Al_2O_3$, 0,5 % $SiO_2$, 0,01 % CaO und 0,13 % $V_2O_5$ eingefüllt. Das Quarzrohr wurde auf 1000° C erhitzt und Chlorgas mit einer Strömungsgeschwindigkeit von 0,5 cm/s hindurchgeleitet. Die anfangs kräftige $FeCl_3$-Entwicklung ließ nach 60 Minuten erheblich nach und war nach weiteren 30 Minuten praktisch beendet. Nun wurde aus dem Quarzrohr ein inhomogenes, fest zusammengebackenes Produkt entnommen, welches offenbar nur an der Oberfläche mit dem Chlor reagiert hatte und einen durchschnittlichen $Fe_2O_3$-Gehalt von 34,3 % aufwies.

**Beispiel 2** (gemäß der Erfindung)

In einem senkrecht stehenden Quarzrohr (40 mm Ø) mit eingeschmolzener D1-Fritte wurden 40 g Ilmenit mit einer Schüttdichte von 2400 g/l sowie der Zusammensetzung 53,5 % $TiO_2$, 21,5 %· FeO, 20,9 % $Fe_2O_3$, 0,9 % $Al_2O_3$, 0,5 % $SiO_2$, 0,01 % CaO und 0,13 % $V_2O_5$ unter Aufwirbelung mit Stickstoff auf 950° C erhitzt. Unter Aufrechterhaltung dieser Temperatur wurde dann als Wirbelgas ein Gemisch von 75 Volumen % Chlor und 25 Volumen % Stickstoff mit einer Strömungsgeschwindigkeit von 3,8 cm/s (bezogen auf Normalbedingungen und auf das leere Quarzrohr) durchgeleitet. Das sich bildende Eisen-III-chlorid wurde in nachgeschalteten Abscheidegefäßen niedergeschlagen. Die Chlorierung wurde 20 Minuten durchgeführt.

Als Rückstand verblieben im Quarzrohr 23,6 g eines lokkeren grauweißen Pulvers mit einem $TiO_2$-Gehalt von 92,8 % sowie mit 3,9 % Eisen und 0,006 % Vanadium.

$TiCl_4$-Nebel wurden im Abgas nicht beobachtet.

**Beispiel 3** (gemäß der Erfindung)

In der im Beispiel 2 beschriebenen Apparatur wurden 40 g des im gleichen Beispiel verwendeten Ilmenits unter Aufwirbelung mit Stickstoff auf 1000° C erhitzt. Unter Aufrechterhaltung dieser Temperatur wurde dann als Wirbelgas ein Gemisch von 85 Volumen% Chlor und 15 Volumen% Stickstoff mit einer Strömungsgeschwindigkeit von 3,8 cm/s (bezogen auf Normalbedingungen und auf das leere Quarzrohr) durchgeleitet. Das sich bildende gasförmige Eisen-III-chlorid wurde in nachgeschalteten Abscheidegefäßen niedergeschlagen. Die Chlorierung wurde 20 Minuten durchgeführt.

Als Rückstand verblieben im Quarzrohr 22,3 g eines lokkeren grauweißen Pulvers mit einem $TiO_2$-Gehalt von 96 % sowie mit 1,0 % Eisen und 0,004 % Vanadium.

Der $TiO_2$-Verlust durch Verflüchtigung von mitgebildetem Titan-IV-chlorid betrug weniger als 0,5 %, bezogen auf das im Ilmenit enthaltene $TiO_2$.

**Beispiel 4** (gemäß der Erfindung)

Ein senkrecht stehendes Quarzrohr (50 mm Ø, Länge: 80 cm) war an seinem unteren Ende mit einem unteren Absperrhahn versehen und an seinem oberen Ende mit einem mit. Ilmenit gemäß Beispiel 2 gefüllten Feststoff-Vorratsbehälter verbunden, welcher an seinem unteren Ende mit einem Absperrhahn versehen eine kontinuierliche oder diskontinuierliche Zudosierung des Ilmenits erlaubte. Oberhalb des am Quarzrohr befindlichen unteren Absperrhahnes konnte außerhalb der Reaktionszone über einen seitlichen Stutzen Chlorierungs-Gas eingeleitet werden. Weiterhin wurde am oberen Ende des Quarzrohres ein weiteres bewegliches Quarzrohr eingeführt, welches zum gelegentlichen Stochern und zur Kontrolle der Fließfähigkeit des Ilmenits diente. Gasförmige Reaktionsprodukte konnten oberhalb der Reaktionszone über einen seitlichen Stutzen aus dem Quarzrohr entweichen.

Zunächst wurde das senkrecht stehende Quarzrohr vom unteren Absperrhahn bis zur Hälfte seiner etwa 20 cm langen beheizten Zone mit Rutil (96 % $TiO_2$) gefüllt. Unter Durchleiten eines aus 90 Volumen% Chlor und 10 Volumen% Stickstoff bestehenden Gasgemisches mit einer Strömungsgeschwindigkeit von 0,7 cm/s wurde die genannte Zone auf 1000° C aufgeheizt und bei dieser Temperatur gehalten. Dann wurden aus dem Feststoff-Vorratsbehälter kontinuierlich etwa 2 g Ilmenit pro Minute in das Quarzrohr dosiert; nach 30 Minuten wurde etwa die gleiche Menge pro Minute des vorher eingefüllten Rutils abgezogen. Nach 60 Minuten wurde die Dosierung von Ilmenit beendet, jedoch das Durchleiten des Gasgemisches noch 15 Minuten fortgesetzt. Aus dem großteils lockeren Reaktionsgemenge wurde nach dem Erkalten eine Probe mit einem $TiO_2$-Gehalt von 94,6 % sowie mit 2,1 % Eisen und 0,010 % Vanadium entnommen. Der $TiO_2$-Verlust durch Verflüchtigung von mitgebildetem Titan-IV-chlorid betrug weniger als 0,5 %, bezogen auf das im Ilmenit enthaltende $TiO_2$.

**Beispiel 5** (gemäß der Erfindung)

Beispiel 4 wurde mit den Abänderungen wiederholt, daß ein aus 85 Volumen % Chlor und 15 Volumen % Stickstoff bestehendes Gasgemisch mit einer Strömungsgeschwindigkeit von 0,7 cm/s verwendet wurde und daß das Gasgemisch durch die auf 970° C beheizte Zone hindurchgeleitet wurde.

Ein nach dem Erkalten aus dem lockeren Reaktionsgemenge entnommene Probe wies einen $TiO_2$-Gehalt von 92,2 % sowie 4,1 % Eisen und 0,015 % Vanadium auf.

Der $TiO_2$-Verlust durch Verflüchtigung von mitgebildetem Titan-IV-chlorid betrug weniger als 0,5 %, bezogen auf das im Ilmenit enthaltene $TiO_2$.

**Patentansprüche:**

1. Verfahren zur Herstellung von Titandioxid-Konzentraten durch Entfernen des Eisens und Vanadiums aus deren Oxide aufweisendem titanoxidhaltigem Material mit Hilfe von chlorhaltigen Gasen ohne Zusatz von Kohlenstoff, <u>dadurch gekennzeichnet</u>, daß man das titanoxidhaltige Material sich in Richtung der Schwerkraft in einer auf Temperaturen von 800 bis 1010°C aufgeheizten Reaktionszone bewegen läßt und dabei im Gegenstrom mit einem aus Chlor und bis zu 30 Volumen% Inertgas bestehenden Gasgemisch umsetzt, wobei sich bildendes Eisen-III-chlorid und Vanadiumoxichlorid verflüchtigt werden und ein im wesentlichen aus Titanoxid bestehender Rückstand verbleibt.

2. Verfahren nach Anspruch 1, <u>dadurch gekennzeichnet</u>, daß man das titanoxidhaltige Material durch die senkrecht angeordnete Reaktionszone rieseln läßt.

3. Verfahren nach Anspruch 2, <u>dadurch gekennzeichnet</u>, daß man das titanoxidhaltige Material in der Reaktionszone mit Hilfe des chlorhaltigen Gasgemisches aufwirbelt.

4. Verfahren nach einem der Ansprüche 1 bis 3, <u>dadurch gekennzeichnet</u>, daß als Inertgas Stickstoff dient.

5. Verfahren nach einem der Ansprüche 1 bis 4, <u>dadurch gekennzeichnet</u>, daß das Gasgemisch mindestens 85 Volumen% Chlor enthält.

**Revendications**

1. Procédé de préparation de concentrés de dioxyde de titane par élimination du fer et du vanadium de matériaux contenant de l'oxyde de titane et des oxydes de fer et de vanadium à l'aide de gaz contenant du chlore sans addition de carbone, caractérisé en ce que l'on fait circuler les matériaux contenant de l'oxyde de titane dans la direction de la pesanteur dans une zone de réaction chauffée à des températures de 800-1010°C en les faisant réagir simultanément, à contre-courant, avec un mélange gazeux constitué par du chlore et jusqu'à 30 % en volume de gaz inerte, le chlorure de fer III et l'oxychlorure de vanadium obtenus étant volatilisés avec obtention d'un résidu constitué essentiellement par l'oxyde de titane.

2. Procédé selon la revendication 1, caractérisé en ce que l'on fait ruisseler le matériau contenant de l'oxyde de titane à travers la zone de réaction disposée verticalement.

3. Procédé selon la revendication 2, caractérisé en ce que l'on fluidise le matériau contenant de l'oxyde de titane dans la zone de réaction à l'aide du mélange gazeux contenant du chlore.

4. Procédé selon l'une des revendications 1 à 3, caractérisé en ce que l'azote sert de gaz inerte.

5. Procédé selon l'une des revendications 1 à 4, caractérisé en ce que le mélange gazeux contient au moins 85 % en volume de chlore.

**Claims**

1. Process for making titanium dioxide concentrates by removing iron and vanadium from material containing titanium oxide and iron and vanadium oxides which comprises: allowing the material containing titanium oxide to travel downwardly under the influence of gravity inside a reaction zone heated to 800 to 1010°C and reacting it with a countercurrently flowing mixture consisting of chlorine and up to 30 volume % inert gas, resulting iron(III)chloride and vanadium oxychloride becoming volatilized and a residue consisting essentially of titanium dioxide remaining behind.

2. Process as claimed in claim 1, wherein the material containing titanium oxide is allowed to drop through the reaction zone arranged in upright position.

3. Process as claimed in claim 2, wherein the material containing titanium dioxide is fluidized in the reaction zone by means of the gas mixture containing chlorine.

4. Process as claimed in any of claims 1 to 3, wherein the inert gas is nitrogen.

5. Process as claimed in any of claims 1 to 4, wherein the gas mixture contains at least 85 volume % chlorine.